(19) Europäisches Patentamt

European Patent Office

Office européen des brevets

(11) EP 1 579 913 A1

(12) EUROPEAN PATENT APPLICATION
published in accordance with Art. 158(3) EPC

(43) Date of publication:
28.09.2005 Bulletin 2005/39

(51) Int Cl.$^7$: B01J 35/04, B01D 53/94,
F01N 3/24, F01N 3/28

(21) Application number: 03768258.0

(22) Date of filing: 25.12.2003

(86) International application number:
PCT/JP2003/016773

(87) International publication number:
WO 2004/060561 (22.07.2004 Gazette 2004/30)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 27.12.2002 JP 2002380831

(71) Applicant: The Chugoku Electric Power Co., Inc.
Hiroshima 730-8701 (JP)

(72) Inventor: SHIRAKURA, Shigeo
Naka-ku Hiroshima-shi, Hiroshima 730-870 (JP)

(74) Representative: Strehl Schübel-Hopf & Partner
Maximilianstrasse 54
80538 München (DE)

(54) HONEYCOMB CATALYST, DENITRATION CATALYST OF DENITRATION DEVICE, AND EXHAUST GAS DENITRATION DEVICE

(57) The present invention provides a honeycomb catalyst and an $NO_x$ removal catalyst for use in an $NO_x$ removal apparatus which can be employed at high efficiency, and a flue gas $NO_x$ removal apparatus, whereby the running cost of a flue gas $NO_x$ removal system in terms of the $NO_x$ removal catalyst is reduced by about one-half.

The honeycomb catalyst having gas conduits for feeding a gas to be treated from an inlet to an outlet of each conduit and performing gas treatment on the sidewalls of the conduit, wherein the honeycomb catalyst has an approximate length such that the flow of the gas to be treated which has been fed into the gas conduits is straightened in the vicinity of the outlet.

FIG. 1

EP 1 579 913 A1

**Description**

Technical Field

The present invention relates to a honeycomb-form catalyst (hereinafter referred to simply as honeycomb catalyst) for use in treatment of automobile exhaust gas, purification of gas, chemical synthesis, etc. More particularly, the invention relates to a high-performance $NO_x$ removal catalyst and a flue gas $NO_x$ removal apparatus, for efficiently removing $NO_x$ from flue gas produced by a facility such as a thermal power station.

Background art

Conventionally, boilers provided in thermal power stations and a variety of large-scale boilers employing a fuel such as petroleum, coal, or fuel gas, waste incinerators, and similar apparatuses have been equipped with a flue gas $NO_x$ removal apparatus for treating exhaust gas which apparatus contains a plurality of $NO_x$ removal catalyst layers.

The $NO_x$ removal catalyst is generally composed of a carrier (e.g., $TiO_2$), an active component (e.g., $V_2O_5$), and a co-catalyst component (e.g., tungsten oxide or molybdenum oxide), and multi-component oxide $NO_x$ removal catalysts such as $VO_x$-$WO_y$-$TiO_2$ and $VO_x$-$MoO_y$-$TiO_2$ are employed.

The $NO_x$ removal catalysts typically assume the form of honeycomb, plate, etc. Honeycomb catalysts include a coated catalyst, which is fabricated by producing a honeycomb substrate and coating the substrate with a catalyst component; a kneaded catalyst, which is fabricated by kneading a substrate material with a catalyst component and molding into a honeycomb catalyst; and an impregnated catalyst, which is fabricated by impregnating a honeycomb substrate with a catalyst component. Plate-form catalyst are fabricated by coating a metallic substrate or a ceramic substrate with a catalyst component.

In any case, during use, the catalytic performance of the above catalysts is problematically deteriorated with elapse of time as a result of deposition, on the surface of the catalysts, of a substance which deteriorates the catalytic performance (hereinafter referred to as deteriorating substance) or through migration of the dissolved deteriorating substance into the catalysts.

In this connection, a variety of methods for regenerating an $NO_x$ removal catalyst has conventionally been studied.

For example, there have been studied some methods including physically removing a deteriorated portion and foreign matter so as to expose a catalytically active surface; e.g., a method including abrasion of an inner surface of a discharge gas conduit by use of an abrasive (see, for example, Patent Document 1); a method including scraping a deteriorated surface portion of an $NO_x$ removal catalyst to thereby expose a catalytically active new surface (see, for example, Patent Document 2); and a method including causing a gas accompanying microparticles to flow through a through-hole to thereby remove foreign matter (see, for example, Patent Document 3).

In addition, there have been studied catalytic performance regeneration methods through washing; e.g., a method including washing a deteriorated catalyst with an acid (pH≤5) or an alkali (pH≥8) (see, for example, Patent Document 4); a method including washing a deteriorated catalyst sequentially with water or a dilute aqueous inorganic acid solution, with a 0.1 to 5 wt.% aqueous oxalic acid solution, and with water to remove oxalic acid residing on the catalyst (see, for example, Patent Document 5); and a method including washing a deteriorated catalyst with water (50°C to 80°C), followed by drying (see, for example, Patent Document 6).

As described above, a variety of regeneration methods have been studied. However, regarding $NO_x$ removal catalysts *per se,* the performance and specifications thereof remain unchanged.

[Patent Document 1]

Japanese Patent Application Laid-Open *(kokai)* No. 1-119343 Claims and other sections)

[Patent Document 2]

Japanese Patent Application Laid-Open *(kokai)* No. 4-197451

[Patent Document 3]

Japanese Patent Application Laid-Open *(kokai)* No. 7-116523

[Patent Document 4]

Japanese Patent Application Laid-Open (kokai) No. 64-80444

[Patent Document 5]

Japanese Patent Application Laid-Open (kokai) No. 7-222924

[Patent Document 6]

Japanese Patent Application Laid-Open (kokai) No. 8-196920

Disclosure of the Invention

In view of the foregoing, an object of the present invention is to provide a honeycomb catalyst which facilitates detection of actually deteriorated $NO_x$ removal catalysts, thereby attaining effective utilization of $NO_x$ removal catalysts. Another object of the invention is to provide an $NO_x$ removal catalyst for use in an $NO_x$ removal apparatus of the honeycomb catalyst. Still another object of the invention is to provide a flue gas $NO_x$ removal apparatus.

Accordingly, a first mode of the present invention for attaining the aforementioned objects provides a honeycomb catalyst having gas conduits for feeding a gas to be treated from an inlet to an outlet of each conduit and performing gas treatment on the sidewalls of the conduit, characterized in that the honeycomb catalyst has an approximate length such that the flow of the gas to be treated which has been fed into the gas conduits is regulated and straightened in the vicinity of the outlet.

According to the first mode, an exhaust gas fed through the inlet of the honeycomb catalyst via the gas conduits is effectively caused to be in contact with the sidewalls until the flow of the gas is straightened, whereby catalytic reaction can be performed effectively. Thus, the honeycomb catalyst is capable of performing catalytic reaction from the inlet to a portion in the vicinity of the outlet.

A second mode of the present invention is drawn to a specific embodiment of the honeycomb catalyst of the first mode, wherein the length Lb (mm) is represented by equation (A) :

$$Lb = a \ (Ly/Lys \cdot 22e^{0,035(Ly \cdot Uin)} ) \tag{A}$$

(wherein Uin (m/s) represents a gas inflow rate, Ly (mm) represents an aperture size, Lys is an aperture size of 6 mm (constant value), and "a" is a constant falling within a range of 3 to 6, when the aperture size (Ly) is 6 mm and the gas inflow rate is 6 m/s).

According to the second mode, the optimum length of the $NO_x$ removal catalyst so as to cause the catalyst to be involved in $NO_x$ removal reaction throughout the length thereof can be reliably and precisely specified.

A third mode of the present invention provides an $NO_x$ removal catalyst for use in an $NO_x$ removal apparatus, which is a honeycomb catalyst for use in a flue gas $NO_x$ removal apparatus, the catalyst having gas conduits for feeding an exhaust gas from an inlet to an outlet of each conduit and performing $NO_x$ removal on the sidewalls of the conduit, characterized in that the $NO_x$ removal catalyst has an approximate length such that the flow of the exhaust gas which has been fed into the gas conduits is straightened in the vicinity of the outlet.

According to the third mode, an exhaust gas fed through the inlet of the $NO_x$ removal catalyst via the gas conduits is effectively caused to be in contact with the sidewalls until the flow of the gas is straightened, whereby $NO_x$ removal reaction can be performed effectively. Thus, the $NO_x$ removal catalyst is capable of performing catalytic reaction from the inlet to a portion in the vicinity of the outlet.

A fourth mode of the present invention is drawn to a specific embodiment of the $NO_x$ removal catalyst of the third mode for use in an $NO_x$ removal apparatus, wherein the length Lb (mm) is represented by equation (A):

$$Lb = a \ (Ly/Lys \cdot 22e^{0,035(Ly \cdot Uin)} ) \tag{A}$$

(wherein Uin (m/s) represents a gas inflow rate, Ly (mm) represents an aperture size, Lys is an aperture size of 6 mm (constant value), and "a" is a constant falling within a range of 3 to 6, when the aperture size (Ly) is 6 mm and the gas inflow rate is 6 m/s).

According to the fourth mode, the optimum length of the $NO_x$ removal catalyst so as to cause the catalyst to

be involved in NO$_x$ removal reaction throughout the length thereof can be reliably and precisely specified.

A fifth mode of the present invention is drawn to a specific embodiment of the NO$_x$ removal catalyst of the third mode for use in an NO$_x$ removal apparatus, wherein the length of the NO$_x$ removal catalyst falls within a range of 300 mm to 450 mm.

According to the fifth mode, the catalyst is involved in NO$_x$ removal reaction throughout the entire length thereof.

A sixth mode of the present invention provides a flue gas NO$_x$ removal apparatus comprising a plurality of NO$_x$ removal catalyst layers provided in the gas flow direction, each catalyst layer being composed of a plurality of honeycomb NO$_x$ removal catalysts juxtaposed in a direction crossing the gas flow direction,

each honeycomb NO$_x$ removal catalyst having gas conduits for feeding an exhaust gas from an inlet to an outlet of each conduit and performing NO$_x$ removal on the sidewalls of the conduit,

characterized in that each of the NO$_x$ removal catalysts forming each NO$_x$ removal catalyst layer has an approximate length such that the flow of the exhaust gas which has been fed into the gas conduits is straightened in the vicinity of the outlet, and two NO$_x$ removal catalyst layers adjacent to each other are disposed with a space therebetween, the space serving as a common gas conduit where exhaust gas flows discharged through the NO$_x$ removal catalysts are intermingled one another.

According to the sixth mode, the flow of an exhaust gas fed through the inlets of the NO$_x$ removal catalyst layers via the gas conduits is not straightened to a portion in the vicinity of the outlet and is effectively caused to be in contact with the sidewalls, whereby NO$_x$ removal reaction can be performed effectively. The exhaust gas flow discharged through each NO$_x$ removal catalyst layer forms turbulent flow in each common gas conduit, and the turbulent flow is introduced to a subsequent NO$_x$ removal catalyst layer. Thus, the entirety of the subsequent NO$_x$ removal catalyst can also be effectively involved in NO$_x$ removal reaction.

A seventh mode of the present invention is drawn to a specific embodiment of the flue gas NO$_x$ removal apparatus of the sixth mode, wherein the length Lb (mm) is represented by equation (A):

$$Lb = a \left( Ly/Lys \cdot 22e^{0.035 \, (Ly \cdot Uin)} \right) \qquad (A)$$

(wherein Uin (m/s) represents a gas inflow rate, Ly (mm) represents an aperture size, Lys is an aperture size of 6 mm (constant value), and "a" is a constant falling within a range of 3 to 6, when the aperture size (Ly) is 6 mm and the gas inflow rate is 6 m/s).

According to the seventh mode, the optimum length of the NO$_x$ removal catalyst so as to cause the catalyst to be involved in NO$_x$ removal reaction throughout the length thereof can be reliably and precisely specified.

An eighth mode of the present invention is drawn to a specific embodiment of the flue gas NO$_x$ removal apparatus of the sixth mode, wherein the length of the NO$_x$ removal catalyst falls within a range of 300 mm to 450 mm.

According to the eighth mode, the catalyst is involved in NO$_x$ removal reaction throughout the entire length thereof.

A ninth mode of the present invention is drawn to a specific embodiment of the flue gas NO$_x$ removal apparatus of the seventh or eighth mode, which has 3 to 5 stages of the NO$_x$ removal catalyst layers having a specific length (Lb).

According to the ninth mode, all of the provided NO$_x$ removal catalyst layers are effectively involved in NO$_x$ removal reaction.

The present invention is applicable to any type of conventionally employed honeycomb catalyst. The term "honeycomb catalyst" refers to a catalyst unit including gas conduits having a cross-section of a polygon such as square, hexagon, or triangle, and performing catalytic reaction on the sidewalls of the gas conduits. No particular limitation is imposed on the form of the honeycomb catalyst, and typical forms include a cylinder containing gas conduits each having a hexagonal cross-section, and a rectangular prism containing gas conduits each having a square cross-section and arranged in a lattice-like form.

Conventionally, typical honeycomb NO$_x$ removal catalysts have a gas conduit pitch of 7 mm (aperture size: about 6 mm) and a length of about 700 mm to 1,000 mm. The present inventors have investigated the deterioration status of such catalysts after use along a longitudinal direction, and have found that the catalysts are more deteriorated on the inlet side than on the outlet side; the deterioration status is virtually unchanged in a portion ranging from the 300 mm site from the inlet to the outlet; and particularly, the catalysts are less involved in NO$_x$ removal reaction in a portion ranging from the outlet to the 300 mm site (from the outlet) than in a portion on the inlet side. The present invention has been accomplished on the basis of these findings. In other words, the present invention has been accomplished on the basis of the following finding by the inventors. Specifically, an exhaust gas is fed into an NO$_x$ removal catalyst through gas conduits as a turbulent flow, and NO$_x$ removal reaction is performed through contact of the gas with the sidewalls of the gas conduits. However, the flow of the thus-reacted exhaust gas is gradually straightened.

Contact of the straightened gas flows with the sidewalls of the conduits is minimized, thereby failing to attain effective $NO_x$ removal.

Furthermore, one conceivable mechanism that explains reduction in $NO_x$- or $NH_3$-removal efficiency is as follows. When an exhaust gas is fed from a wide space on the upstream side of the $NO_x$ removal catalyst to gas conduits of the catalyst, percent space of the gas is reduced from 1 to 0.6 to 0.7. The exhaust gas passes through the gas conduits while being in contact with the sidewalls of the conduits (catalyst surfaces) in a considerably turbulent state. However, during the course of passage through the conduits, the gas flows are gradually regulated and straightened and mass transfer is controlled through diffusion only. After straightening, $NO_x$ molecules and $NH_3$ molecules which are to collide with the sidewalls decrease in number considerably.

Thus, when an $NO_x$ removal catalyst including gas conduits each having an aperture size of 6 mm (pitch: about 7 mm) is used, the flow of introduced exhaust gas is straightened at a depth of about 300 to 450 mm from the inlet, although the depth varies depending on the flow conditions of the exhaust gas. According to the present invention, $NO_x$ removal catalysts each having a length of about 300 to 450 mm are incorporated into a flue gas $NO_x$ removal apparatus. The length is suitable for attaining effective utilization of the $NO_x$ catalysts, and $NO_x$ removal performance is unchanged, even though the length of the catalysts increases. As compared with conventional, typical cases in which two stages of $NO_x$ removal catalysts each having a length of 700 mm to 1,000 mm are employed, use of three stages of $NO_x$ removal catalysts each having a length of 400 mm to 500 mm or use of four or more stages of $NO_x$ removal catalysts each having a length of about 300 mm remarkably enhances $NO_x$ removal performance. Preferably, two $NO_x$ removal catalyst layers adjacent to each other are disposed with a space therebetween, the space serving as a common gas conduit where exhaust gas flows that are to be treated and that are discharged through the $NO_x$ removal catalysts are intermingled one another. The length of the common gas conduit is preferably such that turbulent flow is satisfactorily formed. Needless to say, a baffle plate or a similar member for intentionally forming turbulent flow may be provided in the common gas conduit.

Meanwhile, $NO_x$ removal by use of an $NO_x$ removal catalyst is performed at an exhaust gas flow rate of about 5 m/sec to 10 m/sec, and a honeycomb catalyst is considered to provide the same $NO_x$ removal effect when used under such a flow rate.

In the honeycomb catalyst of the present invention, catalytic reaction occurs on the sidewalls of the honeycomb structure. Thus, the honeycomb catalyst may be employed not only as an $NO_x$ removal catalyst for use in a flue gas $NO_x$ removal apparatus, but also as a type of catalyst for any purpose, so long as the catalyst has structural characteristics such that fluid to be treated passes through the honeycomb. In particular, the honeycomb catalyst is applicable to any case where the fluid to be reacted contains a substance that deteriorates the catalyst to reduce reaction efficiency.

As described hereinabove, the present invention provides a honeycomb catalyst and an $NO_x$ removal catalyst for use in an $NO_x$ removal apparatus which can be employed at high efficiency, and a flue gas $NO_x$ removal apparatus, whereby the running cost of a flue gas $NO_x$ removal system in terms of the $NO_x$ removal catalyst is reduced by about one-half.

Brief Description of the Drawings

FIG. 1 schematically shows a configuration of a flue gas $NO_x$ removal apparatus employing an $NO_x$ removal catalyst management unit according to one embodiment of the present invention.
FIG. 2 is a graph showing the results of Test Example 1 of the present invention.
FIG. 3 is a graph showing the results of Test Example 2 of the present invention.
FIG. 4 is a graph showing the results of Test Example 2 the present invention.
FIG. 5 is a graph showing the results of Test Example 3 the present invention.
FIG. 6 is a graph showing the results of Test Example 4 the present invention.
FIG. 7 is a graph showing the results of Test Example 4 the present invention.
FIG. 8 is a graph showing the results of Test Example 5 the present invention.
FIG. 9 is a graph showing the results of Test Example 6 the present invention.

Best Modes for Carrying Out the Invention

Best modes for carrying out the invention will next be described with reference to the FIGs. The description is made only for the illustration purpose, and should not be construed as limiting the invention thereto. The present embodiment is the case in which a honeycomb catalyst is employed as an $NO_x$ removal catalyst used in a flue gas $NO_x$ removal apparatus. Needless to say, the present invention is not limited to such use.

<Embodiment>

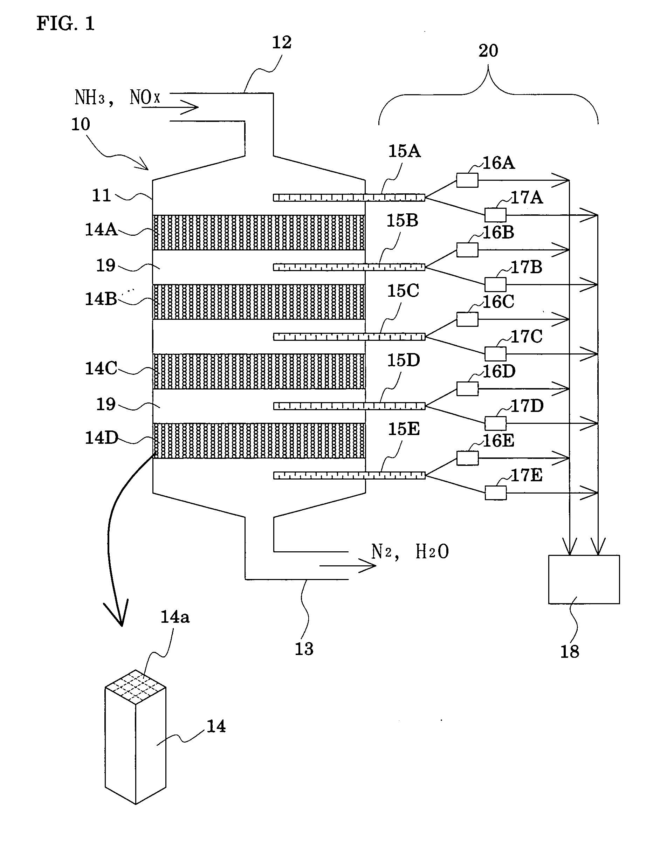

FIG. 1 schematically shows a configuration of a flue gas $NO_x$ removal apparatus equipped with an $NO_x$ removal catalyst according to one embodiment of the present invention. Actually, the flue gas $NO_x$ removal apparatus is provided in a thermal power station. However, no particular limitation is imposed on the facility that includes the $NO_x$ removal catalyst management unit of the embodiment.

As shown in FIG. 1, a flue gas $NO_x$ removal apparatus 10 includes an exhaust duct 12 and a treated gas duct 13. The exhaust duct 12 is in communication with a boiler unit installed in a thermal power station that is connected with an apparatus body 11 on the upstream side. The treated gas duct 13 is connected with the apparatus body 11 on the downstream side. In the apparatus body 11, a plurality of $NO_x$ removal catalyst layers (4 layers in this embodiment) 14A to 14D are disposed at predetermined intervals. The $NO_x$ removal catalyst layers 14A to 14D are arranged so that a discharge gas introduced through the exhaust duct 12 is sequentially passed therethrough, and reduce the level of nitrogen oxide ($NO_x$) of the discharge gas through contact with the discharge gas passing through the catalyst layers. Notably, to the exhaust duct 12 communicating with the boiler unit, $NH_3$ is injected in an amount in accordance with the amount of the discharge gas fed from the boiler body.

No particular limitation is imposed on the type, shape, etc. of the $NO_x$ removal catalysts 14 forming the $NO_x$ removal catalyst layers 14A to 14D. Generally, each catalyst is composed of $TiO_2$ serving as a carrier and $V_2O_5$ serving as an active component. In this embodiment, honeycomb catalysts were employed. In the present embodiment, each catalyst layer employs a catalyst in the form of columnar honeycomb, and a plurality of honeycomb catalysts are juxtaposed in combination, thereby forming the catalyst layers 14A to 14D. Each $NO_x$ removal catalyst 14 has a length of 350 mm and includes a plurality of gas conduits 14a arranged at pitches of 7 mm. The interlayer spacing between two adjacent $NO_x$ removal catalyst layers 14A to 14D is about 2,000 mm, which corresponds to the height for allowing a person to perform inspection or sampling of a catalyst. Each interlayer space serves as a common gas conduit 19.

An $NO_x$ removal catalyst management unit 20 is provided with gas sampling means 15A through 15E on the inlet and outlet sides of respective $NO_x$ removal catalyst layers 14A through 14D. The gas sampling means 15A through 15E are connected with $NO_x$ concentration measurement means 16A through 16E and with $NH_3$ concentration measurement means 17A through 17E. The data obtained by the measurement means are transferred to a percent $NO_x$ removal determination means 18 for calculating percent $NO_x$ removal and percent $NO_x$ removal contribution of the respective $NO_x$ removal catalyst layers 14A through 14D.

The gas sampling means 15A through 15E sample, via sampling tubes, a gas to be sampled in a desired amount and at a desired timing, and subsequently feed the sampled gas to the $NO_x$ concentration measurement means 16A through 16E and to the $NH_3$ concentration measurement means 17A through 17E.

No particular limitation is imposed on the timing for sampling a gas by the gas sampling means 15A through 15E. Generally, sampling is carried out during usual operation of the power station, preferably at the nominal load where the amount of gas reaches the maximum, if possible. The interval between sampling operations may be prolonged to about six months, and the interval is sufficient for managing the performance of the $NO_x$ removal catalyst layers 14A through 14D. However, if the interval is shortened, precision in management is enhanced. Thus, the sampling is preferably carried out, for example, once every one to two months. Particularly, in a catalyst layer placed on the downstream side, variation of obtained data increases due to decrease in $NH_3$ concentration. Thus, in order to attain better management and evaluation, preferably, determination of $NH_3$ concentration is performed at short intervals, and percent $NO_x$ removal is calculated from an averaged $NH_3$ concentration value.

The percent $NO_x$ removal determination means 18 collects the measurement data from the $NO_x$ concentration measurement means 16A through 16E and the $NH_3$ concentration measurement means 17A through 17E, and calculates, from the measurement data, percent $NO_x$ removal and percent $NO_x$ removal contribution of respective $NO_x$ removal catalyst layers 14A through 14D.

On the basis of an inlet mole ratio (i.e., inlet $NH_3$/inlet $NO_x$) of the $NO_x$ removal catalyst layers 14A through 14D, the $NH_3$-concentration-based percent $NO_x$ removal ($\eta$) is determined from the following equation (1):

$$\eta = \{(\text{inlet } NH_3 - \text{outlet } NH_3) / (\text{inlet } NH_3 - \text{outlet } NH_3 + \text{outlet}$$

$$NO_x)\} \times 100 \times (\text{evaluation mole ratio/inlet mole ratio}) \tag{1}.$$

As used herein, the term "evaluation mole ratio" refers to a mole ratio which is predetermined for the purpose of evaluating an $NO_x$ removal catalyst. The evaluation mole ratio may be predetermined to an arbitrary value; for example, 0.8, which is almost equal to a mole ratio typically employed for operating a power station.

<Comparative Example>

The procedure of Example was repeated, except that the length of each NO$_x$ removal catalyst was changed to 860 mm, to thereby provide a flue gas NO$_x$ removal apparatus.

<Test Example 1>

From an NO$_x$ removal catalyst layer which had been used for 50,000 hours in the apparatus of Comparative Example, catalyst portions (20 mm site to 850 mm site, from the inlet) were sampled in the longitudinal direction. TiO$_2$ concentration and concentrations of catalyst deterioration substances (CaO and SO$_3$) on the surface of each catalyst sample were determined.

Catalyst portions (50 mm $\times$ 50 mm $\times$ 100 mm in length) were cut from a catalyst included in each catalyst layer, and set in a performance test machine. Portions at the 100 mm site, the 450 mm site, and the 800 mm site were tested. The test gas was fed at a mole ratio (inlet mole ratio = inlet NH$_3$/inlet NO$_x$) of 0.82 and an AV (amount of treatable gas per unit surface area of the catalyst) of 6.5, and percent NO$_x$ removal $\eta$ was calculated on the basis of the afore-mentioned formula (1) employing NH$_3$ concentration.

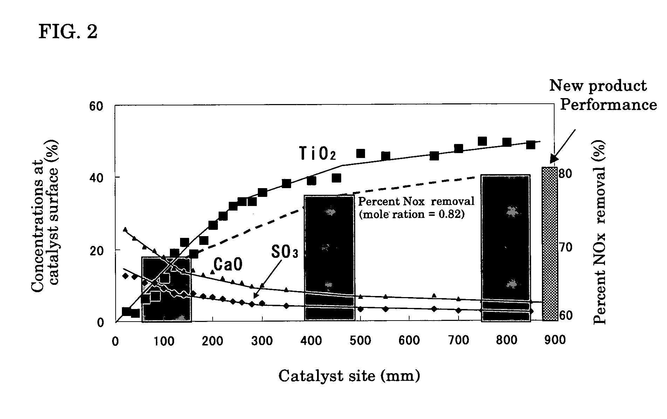

The results are shown in FIG. 2. As a reference product, a new (unused) catalyst was also measured in terms of percent NO$_x$ removal.

The results indicate that the catalyst was severely deteriorated in a portion ranging from the inlet to the 300 mm site, and that a portion ranging from the 450 mm to the outlet exhibits percent NO$_x$ removal almost equal to that of a new catalyst product.

<Test Example 2>

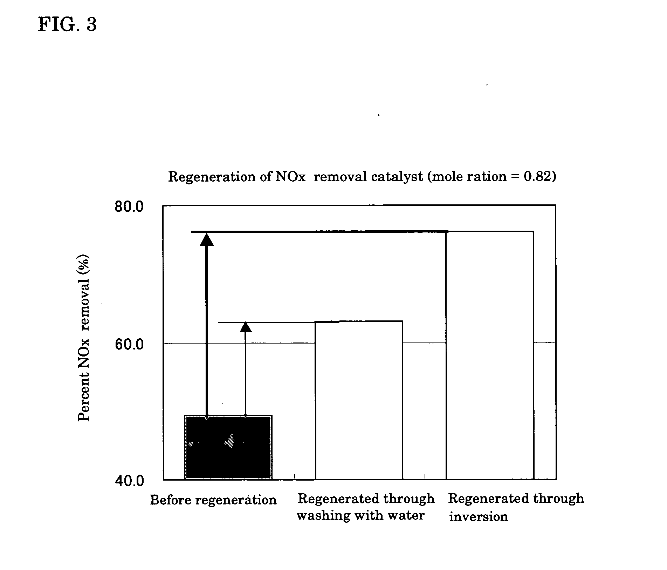

An NO$_x$ removal catalyst which had been used for 28,000 hours, after regeneration through washing with water, in the apparatus of Comparative Example, was re-installed in the flue gas NO$_x$ removal apparatus such that the catalyst was inverted with respect to the direction of the flow of discharge gas. FIG. 3 shows the results.

The results indicate that the inverted catalyst exhibits NO$_x$ removal performance approximately equal to that of a new catalyst product.

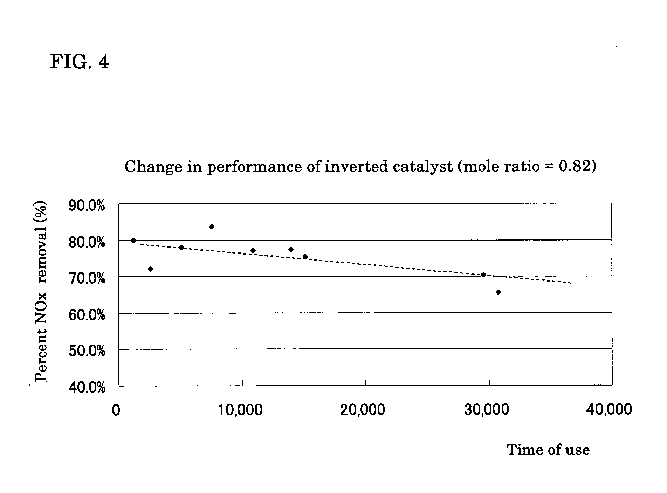

After regeneration and use for 30,000 hours, the inverted catalyst was investigated in terms of change in percent NO$_x$ removal. The results are shown in FIG. 4. As is clear from FIG. 4, a portion on the outlet side of the catalyst was not deteriorated and maintained performance as high as that of a new catalyst product. The portion per se was found to exhibit sufficient NO$_x$ removal performance.

<Test Example 3>

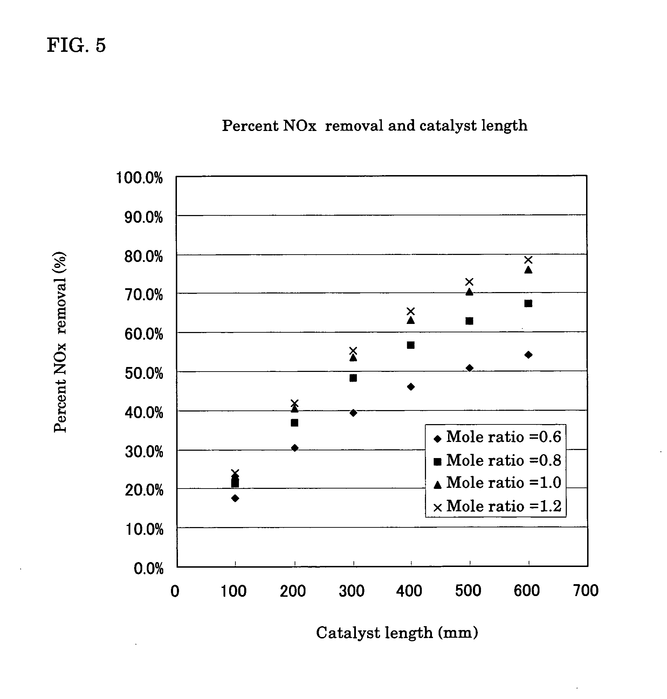

The NO$_x$ removal which had been used in the apparatus of Comparative Example was cut at the 600 mm site from the inlet (along the longitudinal direction), and the cut catalyst piece was set in a performance test machine. Percent NO$_x$ removal was determined at a plurality of sites at intervals of 100 mm under the following conditions: mole ratios (i.e., inlet mole ratio = inlet NH$_3$/inlet NO$_x$) of 0.6, 0.8, 1.0, and 1.2; 360°C; and fluid inflow rate of 6 m/s. The results are shown in Table 1 and FIG. 5.

The results indicate that percent NO$_x$ removal tends to increase in proportion to the distance from the inlet (i.e., length of the catalyst) and that the increase in percent NO$_x$ removal tends to be suppressed when the catalyst length exceeds a certain value. The tendency is attributable to the flow of exhaust gas being gradually straightened.

[Table 1]

|     | 100  | 200  | 300  | 400  | 500  | 600  |
|-----|------|------|------|------|------|------|
| 0.6 | 17.7 | 30.4 | 39.5 | 46.1 | 50.8 | 54.2 |
| 0.8 | 21.3 | 36.9 | 48.3 | 56.7 | 62.9 | 67.4 |
| 1.0 | 23.2 | 40.5 | 53.5 | 63.2 | 70.5 | 75.9 |
| 1.2 | 24.0 | 42.0 | 55.4 | 65.4 | 73.0 | 78.6 |

<Test Example 4>

A honeycomb catalyst (600 mm $\times$ 6 mm $\times$ 6 mm, aperture size: 6 mm (pitch: 7 mm)) was subjected to simulation under the following conditions: 350°C and fluid inflow rate (Uin): 4, 6, and 10 m/s.

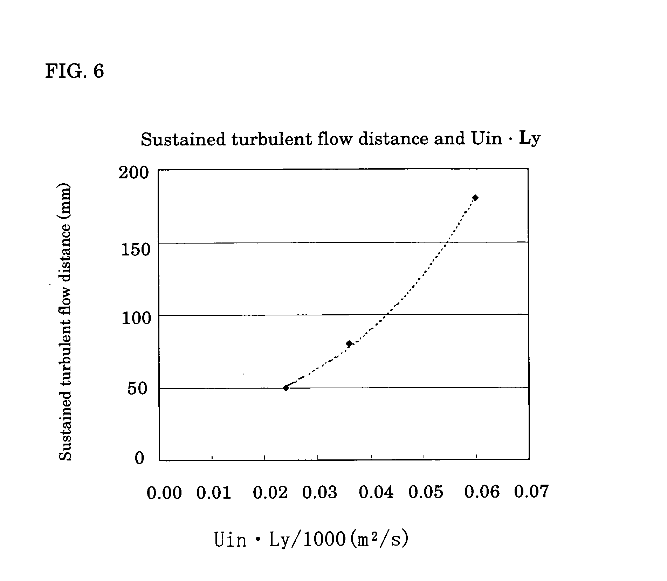

The simulation results of the honeycomb catalyst indicate that Uin and the distance from the inlet to a site where turbulent flow energy is lost in the course of transition from turbulent flow to laminar flow (hereinafter referred to as sustained turbulent flow distance (Lts)) have the relationship shown in FIG. 6. Specifically, sustained turbulent flow distance (Lts) values at fluid inflow rates (Uin) of 4, 6, and 10 m/s were calculated as 50, 80, and 180 mm, respectively.

Theoretically, conditions of fluid are generally determined from inflow rate (Uin) and Reynolds number Re; i. e., a parameter employing aperture size Ly (Re = Uin·Ly/ν, ν = 5.67 × 10$^{-5}$ m$^2$/S; constant).

In a honeycomb catalyst having an aperture size of 6 mm, sustained turbulent flow distance Lts (mm) is derived from a product of inflow rate Uins (m/s) and aperture size Lys (mm). Thus, the relationship between sustained turbulent flow distance Lts and a product of inflow rate Uins (Uin) and aperture size Lys (Ly), as shown in FIG. 6, was obtained. Through the least squares method, sustained turbulent flow distance Lts at an aperture size (Lys) of 6 mm is approximately represented by the following equation (2).

$$Lts = 22e^{0.035(Lys·Uins)} \tag{2}$$

When the aperture size Lys is 6 mm (constant value), the aperture size Ly (mm) is an arbitrary parameter, and Uin (m/s) represents a gas inflow rate, sustained turbulent flow distance Lt can be represented by the following formula (3), which is a general equation.

$$Lt = Ly/Lys·22e^{0.035(Ly·Uin)} \tag{3}$$

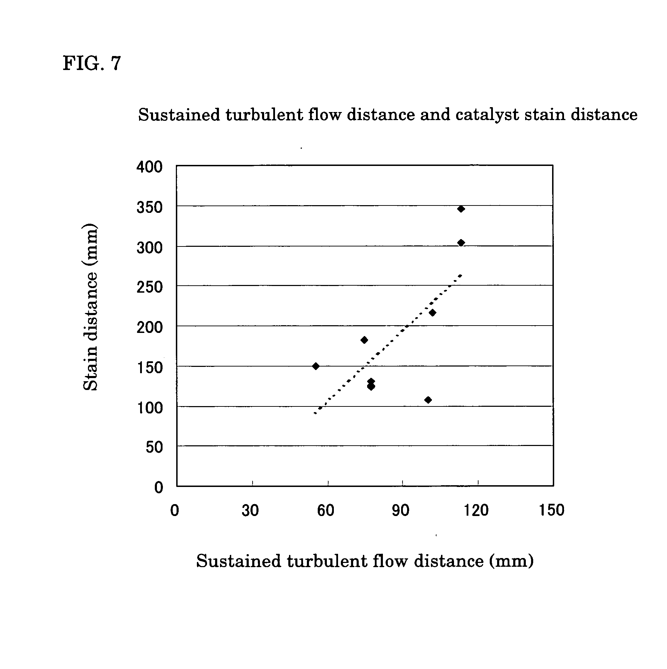

The simulation results were compared with the approximate length (optimum length) of the actual catalyst, the length being such that the flow of the exhaust gas fed into the gas conduits is straightened. Specifically, the relationship between sustained turbulent flow distance Lt and the optimum length of an actual catalyst (i.e., the length of a stained portion of the catalyst (stain length), which is an index for detecting straightening) was investigated. As shown in FIG. 7, in an actual stage of the employed apparatus, turbulent flow is maintained over a portion of the catalyst having a distance longer than the sustained turbulent flow distance Lt, which is derived through simulation. One possible reason of this phenomenon is that inflow rate is varied and flow of the fluid is disturbed.

Accordingly, in an actual catalyst unit, the distance from the inlet to a site where straightening starts (i.e., the optimum catalyst length) must be determined from the above stain length and a certain safety length. Specifically, equation (3) must be multiplied by a constant "a," and the optimum length Lb of the catalyst is considered to be represented by the following equation (4). Note that "a" is a constant falling within a range of 3 to 6, when the aperture size of a honeycomb catalyst is 6 mm (pitch: 7 mm) and the gas inflow rate is 6 m/s.

$$Lb = a·Lt \tag{4}$$

In the aforementioned Test Example 1, a honeycomb catalyst having an aperture size of 6 mm (pitch: 7 mm) was used at a gas inflow rate of 6 m/s. Thus, Lt is 80 mm. When the constant "a" is adjusted to about 3.8, Lt is about 300 mm, which corresponds to the length of a severely deteriorated portion of the catalyst, whereas when the constant "a" is adjusted to about 5.6, Lt is about 450 mm, which corresponds to the length of a portion of the catalyst including a portion exhibiting catalytic performance equivalent to that of a new catalyst product.

In the same honeycomb catalyst, when "a" falls within a range of 3 to 6, the optimum length Lb falls within a range of about 240 to 480 mm. The range of Lb virtually coincides with a range of about 300 to 450 mm, which is considered to be a catalyst length which allows the exhaust gas in the gas conduits starts straightening of the flow. Thus, the optimum length Lb is selected from the range of 240 to 480 mm, corresponding to the "a" value of 3 to 6.

<Test Example 5>

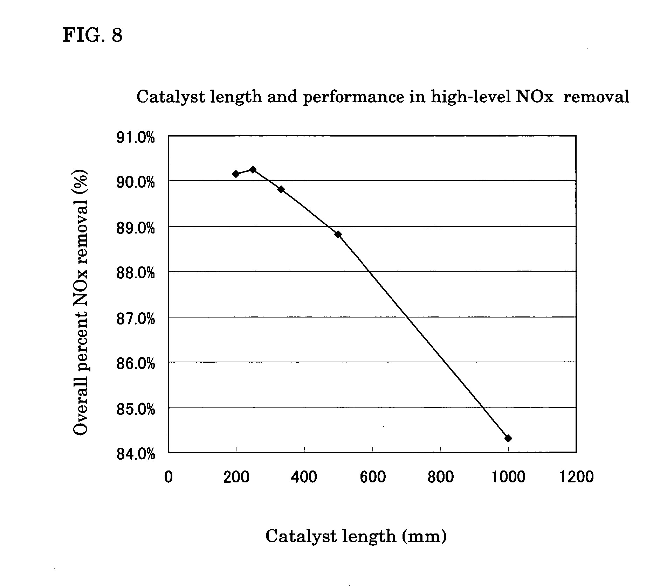

The concept and equation (4) about the optimum length Lb, which were obtained in Test Example 4, was confirmed in apparatus design. Specifically, a variety of catalyst layer sets having different catalyst lengths and stage numbers were analyzed in terms of percent overall NO$_x$ removal and unreacted NH$_3$ through a conventional apparatus designing method on the basis of an SV value (amount of treatable gas per unit volume of the catalyst) and an AV value (amount of treatable gas per unit surface area of the catalyst). The catalyst layer sets (length and number of layers) are as follows: Pattern 1 (in Table 2); catalyst length 1,000 mm, 1 stage, Pattern 2 (in Table 2); catalyst length 500 mm, 2 stages, Pattern 3 (in Table 2); catalyst length 333 mm, 3 stages, Pattern 4 (in Table 2); catalyst length 250 mm, 4 stages, and Pattern 5 (in Table 2); catalyst length 200 mm, 5 stages. The evaluation results of the catalyst sets are shown in Table 2 and FIG. 8.

The results indicate that, even when the total catalyst length is the same, a multi-stage catalyst exhibits an enhanced percent $NO_x$ removal, and that a catalyst set (catalyst length 250 mm, 4 stages) exhibited the highest overall percent $NO_x$ removal. As compared with the case of a catalyst (catalyst length 1,000 mm, 1 stage) (percent $NO_x$ removal: 84.3%), a catalyst set (catalyst length 250 mm, 4 stages), the percent $NO_x$ removal was as high as 90%. In this case, unreacted $NH_3$ was minimized. As a result, when a honeycomb catalyst having an aperture size of 6 mm (pitch: 7 mm) is used at a gas inflow rate of 6 m/s, the optimum length thereof is approximately 250 mm, which falls within the optimum length Lb range of 240 mm to 480 mm, calculated by equation (4) .

In addition, when three to five stages of catalyst layers having a length almost equivalent to that of the optimum length Lb are provided, high overall percent $NO_x$ removal was found to be attained.

[Table 2]

| Pattern | | 1 | 2 | 3 | 4 | 5 |
|---|---|---|---|---|---|---|
| SV ($m_3N/h \cdot m^3$) | | 5,950 | 5,950 | 5,950 | 5,950 | 5,950 |
| AV ($m_3N/h \cdot m^2$) | | 14.9 | 14.9 | 14.9 | 14.9 | 14.9 |
| Catalyst length (mm) | | 1,000 | 500 | 333 | 250 | 200 |
| Inlet $NO_x$ (ppm) | | 300 | 300 | 300 | 300 | 300 |
| Inflow mole ratio | | 0.95 | 0.95 | 0.95 | 0.95 | 0.95 |
| Inlet $NH_3$ (ppm) | | 285 | 285 | 285 | 285 | 285 |
| Stage 1 | $NO_x$ removal (%) | 84.3 | 68.6 | 56.0 | 46.9 | 39.6 |
| | Outlet $NO_x$ (ppm) | 47 | 94 | 132 | 159 | 181 |
| | Outlet $NH_3$ (ppm) | 32 | 79 | 117 | 144 | 166 |
| | Mole ratio | 0.68 | 0.84 | 0.89 | 0.91 | 0.92 |
| Stage 2 | $NO_x$ removal (%) | | 64.4 | 54.2 | 45.9 | 39.0 |
| | Outlet $NO_x$ (ppm) | | 34 | 61 | 86 | 110 |
| | Outlet $NH_3$ (ppm) | | 19 | 46 | 71 | 95 |
| | Mole ratio | | | 0.75 | 0.83 | 0.86 |
| Stage 3 | $NO_x$ removal (%) | | | 49.5 | 44.1 | 38.1 |
| | Outlet $NO_x$ (ppm) | | | 31 | 48 | 68 |
| | Outlet $NH_3$ (ppm) | | | 16 | 33 | 53 |
| | Mole ratio | | | | 0.69 | 0.78 |
| Stage 4 | $NO_x$ removal (%) | | | | 39.2 | 36.3 |
| | Outlet $NO_x$ (ppm) | | | | 29 | 44 |
| | Outlet $NH_3$ (ppm) | | | | 14 | 29 |
| | Mole ratio | | | | | 0.66 |
| Stage 5 | $NO_x$ removal (%) | | | | | 32.2 |
| | Outlet $NO_x$ (ppm) | | | | | 30 |
| | Outlet $NH_3$ (ppm) | | | | | 15 |
| Apparatus outlet $NO_x$ (ppm) | | 47.1 | 33.5 | 30.6 | 29.2 | 29.6 |
| Overall $NO_x$ removal (%) | | 84.3 | 88.8 | 89.8 | 90.3 | 90.1 |
| Unreacted $NH_3$ (ppm) | | 32 | 19 | 16 | 14 | 15 |

<Test Example 6>

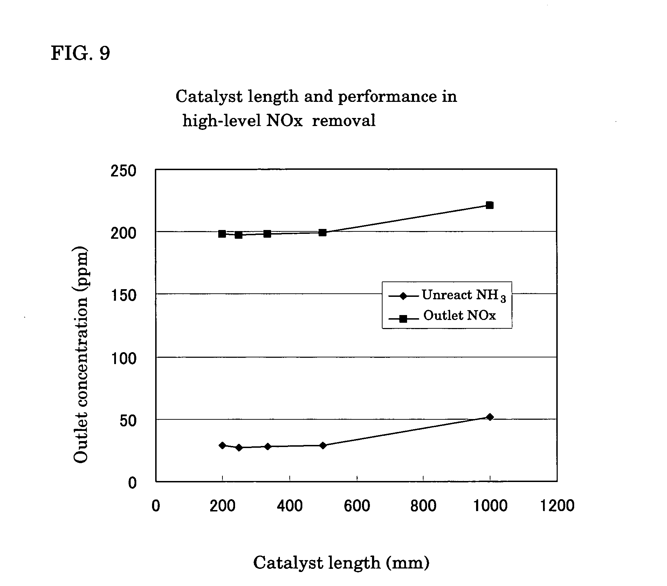

In a manner similar to Test Example 5, the catalyst layer sets (length and type of catalyst layer(s)) shown in Test Example 5 were analyzed in terms of apparatus outlet $NO_x$ and unreacted $NH_3$ through a conventional apparatus designing method under the conditions: inlet $NO_x$ = 1,000 ppm, inflow mole ratio = 0.83, and inlet $NH_3$ = 830 ppm). The results are shown in Table 3 and FIG. 9.

The results indicate that a catalyst set (catalyst length 250 mm, 4 stages) exhibited the lowest apparatus outlet $NO_x$ and unreacted $NH_3$. Therefore, a honeycomb catalyst having a length of 250 mm was found to effectively work in an apparatus where high concentration $NO_x$ must be treated (e.g., $NO_x$ removal apparatus for a diesel engine).

[Table 3]

| Pattern | | 1 | 2 | 3 | 4 | 5 |
|---|---|---|---|---|---|---|
| SV ($m_3N/h·m^3$) | | 5,950 | 5,950 | 5,950 | 5,950 | 5,950 |
| AV ($m_3N/h·m^2$) | | 14.9 | 14.9 | 14.9 | 14.9 | 14.9 |
| Catalyst length (mm) | | 1,000 | 500 | 333 | 250 | 200 |
| Inlet $NO_x$ (ppm) | | 1,000 | 1,000 | 1,000 | 1,000 | 1,000 |
| Inflow mole ratio | | 0.83 | 0.83 | 0.83 | 0.83 | 0.83 |
| Inlet $NH_3$ (ppm) | | 830 | 830 | 830 | 830 | 830 |
| Stage 1 | $NO_x$ removal (%) | 77.9 | 64.0 | 52.6 | 44.2 | 37.4 |
| | Outlet $NO_x$ (ppm) | 221 | 360 | 474 | 558 | 626 |
| | Outlet $NH_3$ (ppm) | 51 | 190 | 304 | 388 | 456 |
| | Mole ratio | 0.23 | 0.53 | 0.64 | 0.70 | 0.73 |
| Stage 2 | $NO_x$ removal (%) | | 44.7 | 44.2 | 39.5 | 34.6 |
| | Outlet $NO_x$ (ppm) | | 199 | 265 | 337 | 409 |
| | Outlet $NH_3$ (ppm) | | 29 | 95 | 167 | 239 |
| | Mole ratio | | | 0.36 | 0.50 | 0.58 |
| Stage 3 | $NO_x$ removal (%) | | | 25.2 | 29.6 | 29.6 |
| | Outlet $NO_x$ (ppm) | | | 198 | 238 | 288 |
| | Outlet $NH_3$ (ppm) | | | 28 | 68 | 118 |
| | Mole ratio | | | | 0.28 | 0.41 |
| Stage 4 | $NO_x$ removal (%) | | | | 17.0 | 20.8 |
| | Outlet $NO_x$ (ppm) | | | | 197 | 228 |
| | Outlet $NH_3$ (ppm) | | | | 27 | 58 |
| | Mole ratio | | | | | 0.26 |
| Stage 5 | $NO_x$ removal (%) | | | | | 12.9 |
| | Outlet $NO_x$ (ppm) | | | | | 199 |
| | Outlet $NH_3$ (ppm) | | | | | 29 |
| Apparatus outlet $NO_x$ (ppm) | | 221.5 | 199.0 | 198.0 | 197.3 | 198.8 |
| Overall $NO_x$ removal (%) | | 77.9 | 80.1 | 80.2 | 80.3 | 80.1 |
| Unreacted $NH_3$ (ppm) | | 51 | 29 | 28 | 27 | 29 |

<Test Example 7>

Two types of $NO_x$ removal catalyst sets for a diesel engine were provided for removal of high concentration $NO_x$. In one catalyst set, the first stage was divided to form a multi-stage, and no such division is performed with respect to the other catalyst set. In a manner similar to Test Example 5, apparatus outlet $NO_x$, overall percent $NO_x$ removal, and unreacted $NH_3$ were calculated through a conventional apparatus designing method. The results are shown in Table 4.

As is clear from Table 4, as compared with the case in which the first stage remained undivided, the divided first stage (700 mm into 350 mm + 350 mm), each divided stage having an optimum Lb, exhibited a slightly reduced apparatus outlet $NO_x$ and unreacted $NH_3$ and a slightly enhanced overall percent $NO_x$ removal. In other words, when a catalyst having a length that is about double the optimum length Lb the aforementioned equation (4) is divided, all catalytic performances including apparatus outlet $NO_x$, overall percent $NO_x$ removal, and unreacted $NH_3$ can be enhanced.

Therefore, in an apparatus employing an $NO_x$ removal catalyst having a length twice or more the optimum length Lb, when the $NO_x$ removal catalyst is divided into sub-layers having an approximate optimum length Lb, performance of the apparatus is considered to be enhanced. In Test Example 7, if the stage 2 catalyst layer and the stage 3 catalyst layer (shown in Table 4), each having a length of 700 mm, are divided into sub-layers having an approximate optimum length Lb, performance of the apparatus is considered to be surely enhanced.

[Table 4]

|  |  | Non-divided stage | Divided-stages |
|---|---|---|---|
| SV  $(m_3N/h \cdot m^3)$ | | 5,950 | 5,950 |
| AV  $(m_3N/h \cdot m^2)$ | | 14.9 | 14.9 |
| Catalyst length/ stage 1  (mm) | | 700 | 350 |
| Catalyst length/ stage 1 divided  (mm) | | | 350 |
| Catalyst length/ stage 2  (mm) | | 700 | 700 |
| Catalyst length/ stage 3  (mm) | | 700 | 700 |
| Catalyst Stage | | 2 | 3 |
| Inlet $NO_x$  (ppm) | | 1,000 | 1,000 |
| Inflow mole ratio | | 0.81 | 0.81 |
| Inlet $NH_3$  (ppm) | | 810 | 810 |
| Stage 1 | $NO_x$ removal  (%) | 71.2 | 53.5 |
| | Outlet $NO_x$  (ppm) | 288 | 465 |
| | Outlet $NH_3$  (ppm) | 98 | 275 |
| | Mole ratio | 0.34 | 0.59 |
| Stage 2 | $NO_x$ removal  (%) | 32.2 | 42.8 |
| | Outlet $NO_x$  (ppm) | 195 | 266 |
| | Outlet $NH_3$  (ppm) | 5 | 76 |
| | Mole ratio | | 0.29 |
| Stage 3 | $NO_x$ removal  (%) | | 27.0 |
| | Outlet $NO_x$  (ppm) | | 194 |
| | Outlet $NH_3$  (ppm) | | 4 |
| | Mole ratio | | |
| Apparatus outlet $NO_x$  (ppm) | | 195.5 | 194.2 |
| Overall $NO_x$ removal  (%) | | 80.5 | 80.6 |
| Unreacted $NH_3$  (ppm) | | 5 | 4 |

Industrial Applicability

The present invention is remarkably advantageous for a catalyst and an apparatus which are required to perform high-level $NO_x$ removal and high-concentration $NO_x$ removal treatment.

**Claims**

1. A honeycomb catalyst having gas conduits for feeding a gas to be treated from an inlet to an outlet of each conduit and performing gas treatment on the sidewalls of the conduit,

   **characterized in that** the honeycomb catalyst has an approximate length such that the flow of the gas to be treated which has been fed into the gas conduits is straightened in the vicinity of the outlet.

2. A honeycomb catalyst according to claim 1, wherein the length Lb (mm) is represented by equation (A):

$$Lb = a \, (Ly/Lys \cdot 22e^{0.035(Ly \cdot Uin)}) \tag{A}$$

   (wherein Uin (m/s) represents a gas inflow rate, Ly (mm) represents an aperture size, Lys is an aperture size of 6 mm (constant value), and "a" is a constant falling within a range of 3 to 6, when the aperture size (Ly) is 6 mm and the gas inflow rate is 6 m/s).

3. An $NO_x$ removal catalyst for use in an $NO_x$ removal apparatus, which is a honeycomb catalyst for use in a flue gas $NO_x$ removal apparatus, the catalyst having gas conduits for feeding an exhaust gas from an inlet to an outlet of each conduit and performing $NO_x$ removal on the sidewalls of the conduit,

   **characterized in that** the $NO_x$ removal catalyst has an approximate length such that the flow of the exhaust gas which has been fed into the gas conduits is straightened in the vicinity of the outlet.

4. An $NO_x$ removal catalyst for use in an $NO_x$ removal apparatus according to claim 3, wherein the length Lb (mm) is represented by equation (A):

$$Lb = a \, (Ly/Lys \cdot 22e^{0.035(Ly \cdot Uin)}) \tag{A}$$

   (wherein Uin (m/s) represents a gas inflow rate, Ly (mm) represents an aperture size, Lys is an aperture size of 6 mm (constant value), and "a" is a constant falling within a range of 3 to 6, when the aperture size (Ly) is 6 mm and the gas inflow rate is 6 m/s).

5. An $NO_x$ removal catalyst for use in an $NO_x$ removal apparatus according to claim 3, wherein the length of the $NO_x$ removal catalyst falls within a range of 300 mm to 450 mm.

6. A flue gas $NO_x$ removal apparatus comprising a plurality of $NO_x$ removal catalyst layers provided in the gas flow direction, each catalyst layer being composed of a plurality of honeycomb $NO_x$ removal catalysts juxtaposed in a direction crossing the gas flow direction,

   each honeycomb $NO_x$ removal catalyst having gas conduits for feeding an exhaust gas from an inlet to an outlet of each conduit and performing $NO_x$ removal on the sidewalls of the conduit,

   **characterized in that** each of the $NO_x$ removal catalysts forming each $NO_x$ removal catalyst layer has an approximate length such that the flow of the exhaust gas which has been fed into the gas conduits is straightened in the vicinity of the outlet, and two $NO_x$ removal catalyst layers adjacent to each other are disposed with a space therebetween, the space serving as a common gas conduit where exhaust gas flows discharged through the $NO_x$ removal catalysts are intermingled one another.

7. A flue gas $NO_x$ removal apparatus according to claim 6, wherein the length Lb (mm) is represented by equation (A):

$$Lb = a \, (Ly/Lys \cdot 22e^{0.035(Ly \cdot Uin)}) \tag{A}$$

   (wherein Uin (m/s) represents a gas inflow rate, Ly (mm) represents an aperture size, Lys is an aperture size of 6 mm (constant value), and "a" is a constant falling within a range of 3 to 6, when the aperture size (Ly) is 6 mm and the gas inflow rate is 6 m/s).

8. A flue gas $NO_x$ removal apparatus according to claim 6, wherein the length of the $NO_x$ removal catalyst falls within a range of 300 mm to 450 mm.

9. A flue gas NO$_x$ removal apparatus according to claim 7 or 8, which has 3 to 5 stages of the NO$_x$ removal catalyst layers having a specific length (Lb).

FIG. 1

NH₃, NOx

N₂, H₂O

FIG. 2

FIG. 3

Regeneration of NOx  removal catalyst (mole ration = 0.82)

FIG. 4

Change in performance of inverted catalyst (mole ratio = 0.82)

FIG. 5

Percent NOx removal and catalyst length

FIG. 6

Sustained turbulent flow distance and Uin · Ly

FIG. 7

Sustained turbulent flow distance and catalyst stain distance

FIG. 8

Catalyst length and performance in high-level NOx removal

FIG. 9

Catalyst length and performance in high-level NOx removal

## INTERNATIONAL SEARCH REPORT

| International application No. |
| --- |
| PCT/JP03/16773 |

A. CLASSIFICATION OF SUBJECT MATTER
Int.Cl$^7$  B01J35/04, B01D53/94, F01N3/24, 3/28

According to International Patent Classification (IPC) or to both national classification and IPC

B. FIELDS SEARCHED

Minimum documentation searched (classification system followed by classification symbols)
Int.Cl$^7$  B01J21/00-38/74, B01D53/94, F01N3/24, 3/28

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 57-113834 A  (Hitachi Zosen Corp.), 15 July, 1982 (15.07.82), Claim 1; page 1, left column, lines 9 to 13; page 2, upper right column, lines 9 to 17, lower rihgt column, lines 2 to 4; Fig. 4 (Family: none) | 1-9 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 March, 2004 (29.03.04) | 13 April, 2004 (13.04.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)